# FASCICULE DE BREVET EUROPEEN

(11) **EP 2 571 939 B1**
(45) Date de publication et mention de la délivrance du brevet: **03.05.2017**
(21) Numéro de dépôt: 11727207.0
(22) Date de dépôt: 17.05.2011
(51) Int. Cl.: C08L 77/06, C08L 67/02, C08L 75/04, C08K 5/00, C08K 5/3492, C08K 5/5313, C08L 23/08

(54) **UTILISATION D'AU MOINS DEUX POLYOLEFINES COMME AGENT ANTI-FLUAGE DANS UNE COMPOSITION TPE IGNIFUGEE**
VERWENDUNG VON MINDESTENS ZWEI POLYOLEFINEN ALS KRIECHSCHUTZMITTEL BEI EINER FLAMMHEMMENDEN TPE-ZUSAMMENSETZUNG
USE OF AT LEAST TWO POLYOLEFINS AS AN ANTI-CREEP AGENT IN A FLAME-RETARDED TPE COMPOSITION

(30) Priorité: 18.05.2010 FR 1053826
(43) Date de publication de la demande: 27.03.2013
(73) Titulaire: ARKEMA FRANCE, 92705 Colombes Cedex (FR)
(72) Inventeur: BLONDEL, Philippe, F-27300 Bernay (FR); FLAT, Jean-Jacques, F-27170 Goupillères (FR)
(86) Numéro de dépôt international: PCT/FR2011/000299
(87) Numéro de publication internationale: WO 2011/144825

(56) Documents cités:
- WO-A1-2006/121549
- WO-A1-2010/047469
- JP-A- 2009 215 347

## Description

La présente invention se rapporte à des compositions polymères thermoplastiques élastomères (abrégé « TPE ») ignifuges, remplissant au moins les 3 critères suivants :
- ne pas comprendre d'ignifugeant halogéné
- être classés V0 ou V1 au test UL 94, sans fluage ni goutte,
- présenter une dureté Shore dans la gamme de 50 Shore A à 80 Shore D, de préférence de 60 Shore A à 72 Shore D, mesurée selon la norme ISO 868.

L'utilisation d'agents ignifugeants non halogénés est exigée afin de remplacer les ignifugeants halogénés qui ont l'inconvénient de provoquer des vapeurs toxiques et corrosives en cas d'inflammation.

Les documents de brevet WO 2010/047469, JP 2009 215347, ou encore WO 2006/121549 décrivent notamment des compositions TPE à la fois ignifuges sans halogène et présentant de bonnes propriétés mécaniques.

Le test UL 94 (Norme NF T 51-072) permet d'établir un classement des matériaux selon leur comportement au feu. Les matériaux reçoivent des notations allant de V0, pour un matériau possédant de très bonnes propriétés de résistance à la propagation d'une flamme, à non-classé (NC), pour les matériaux n'ayant aucune tenue au feu. Les critères de ce classement sont résumés dans le Tableau 1 des exemples ci-après. Les agents ignifugeants efficaces sur un type de polymère ne parviennent pas forcément à ignifuger un autre type de polymère selon le même classement au test UL 94. C'est notamment le cas du cyanurate de mélamine, efficace dans les polyamides mais inefficace dans les TPE, tels que les copolymères à blocs polyamide et blocs polyéther, qui ne résistent pas à la première inflammation du test UL 94 comme le montre le Tableau 2 des exemples ci-après. On rencontre le même problème avec les sels métalliques phosphiniques récemment mis au point pour ignifuger efficacement des polyamides classés alors V0. Lorsque les mêmes sels métalliques phosphiniques sont introduits dans une matrice TPE, on constate que le TPE ne présente pas un bon classement au test UL 94. Le TPE flue dans la flamme et forme des gouttes enflammées dès la première inflammation et il est donc impossible de réaliser la deuxième inflammation selon le test UL 94. Ce type de matériau qui flue (ou coule) lors de l'application d'une flamme ne peut pas être utilisé dans les domaines électriques, électrotechniques, ni a fortiori dans la sécurité électrique.

Pour éviter ces problèmes de fluage et de formation de gouttes enflammées, il est connu d'incorporer au matériau des additifs « anti-goutte », tels que du PTFE, du talc, des nanocharges minérales de type argile modifiée organophiles, des agents siliconés. Dans le cas des TPE, non seulement ces additifs anti-goutte ne suffisent pas pour passer du classement V2 au classement V1 ou V0 du test UL 94, mais en plus ces additifs ont l'inconvénient de rigidifier et de diminuer l'allongement, donc de modifier les propriétés mécaniques caractéristiques des élastomères thermoplastiques.

La demanderesse a maintenant trouvé une composition TPE ignifugée qui ne présente pas les inconvénients précités et qui remplit les 3 critères précités, ceci grâce à l'incorporation combinée de deux types différents de polyoléfine(s) (nommées ci-après P1 et P2) dans la composition TPE.

La présente invention a donc pour objet l'utilisation d'au moins deux polyoléfines P1 et P2 comme agent anti-fluage et/ou agent anti-goutte dans une composition d'élastomère thermoplastique (TPE) ignifugée, caractérisée en ce que :
- P1 comprend au moins un monomère choisi parmi les α-oléfines et au moins un autre monomère choisi parmi les esters vinyliques d'acides carboxyliques;
- P2 comprend au moins un monomère choisi parmi les α-oléfines et au moins un monomère insaturé portant une fonction époxyde ou anhydride d'acide carboxylique ;
- la somme des polyoléfines représente plus de 10% en poids, de préférence ladite somme représente entre 10 et 35% en poids, et
- P2 représente au moins 5% en poids, de préférence de 5 à 7% en poids; et
- ledit TPE représente moins de 55% en poids, et représente de préférence entre 40 et 55% en poids ;
du poids total de la composition.

La présente invention a notamment pour objet une composition comprenant :
- entre 40 et 55 % d'au moins un élastomère thermoplastique (TPE),
- entre 25 et 40 % d'au moins un phosphinate, et
- entre 10 et 35 % d'au moins deux polyoléfines P1 et P2, et P2 représentant au moins 5% en poids,
sur le poids total de la composition, et dans laquelle :
- P1 comprend au moins un monomère choisi parmi les α-oléfines et au moins un autre monomère choisi parmi les esters vinyliques d'acides carboxyliques ;
- P2 comprend au moins un monomère choisi parmi les α-oléfines et au moins un monomère insaturé portant une fonction époxyde ou anhydride d'acide carboxylique.
Le ratio en poids des polyoléfines P1/P2 est supérieur à 1 dans la composition de l'invention.

Dans la présente description, l'expression qui définit une gamme « entre X et Y% » signifie que les bornes X et Y sont exclues de la gamme ; alors que l'expression « compris dans la gamme de X à Y » signifie que les bornes X et Y sont comprises dans la gamme. Dans les expressions « représente moins de X% » ou « représente plus de Y% », il faut comprendre que les valeurs X et Y sont exclues du seuil ou de la gamme.

Par polymère thermoplastique élastomère (TPE), on entend un copolymère à blocs comprenant, en alternance, des blocs ou segments dits durs ou rigides (au comportement plutôt thermoplastique) et des blocs ou segments dits souples ou flexibles (au comportement plutôt élastomère).

Par bloc souple, on entend un bloc qui présente une faible température de transition vitreuse (Tg). Par faible température de transition vitreuse, on entend une température de transition vitreuse Tg inférieure à 15 °C, de préférence inférieure à 0°C, avantageusement inférieure à -15°C, encore plus avantageusement à -30°C, éventuellement inférieure à -50°C.

Le TPE ou copolymère à blocs durs et à blocs souples, est choisi parmi (a) les copolymères à blocs polyesters et blocs polyéthers (appelés aussi COPE ou copolyétheresters), (b) les copolymères à blocs polyuréthanes et blocs polyéthers ou polyesters (appelés aussi TPU abréviation de polyuréthanes thermoplastiques) et (c) les copolymères à blocs polyamide et blocs polyéther (appelés aussi PEBA selon l'IUPAC).
(a) S'agissant des COPE ou copolyétheresters, ce sont des copolymères à blocs polyesters et blocs polyéthers. Ils sont constitués de blocs polyéthers souples issus de polyétherdiols et de blocs polyesters rigides qui résultent de la réaction d'au moins un diacide carboxylique avec au moins un motif diol court allongeur de chaîne. Les blocs polyesters et les blocs polyéthers sont reliés par des liaisons esters résultant de la réaction des fonctions acides de l'acide dicarboxylique avec les fonctions OH du polyétherdiol. L'enchaînement des polyéthers et des diacides forme les blocs souples alors que l'enchaînement du glycol ou du butane diol avec les diacides forme les blocs rigides du copolyétherester. Le diol court allongeur de chaîne peut être choisi dans le groupe constitué du neopentylglycol, du cyclohexanediméthanol et des glycols aliphatiques de formule HO(CH₂)ₙOH dans laquelle n est un entier valant de 2 à 10.
   Avantageusement, les diacides sont des acides dicarboxyliques aromatiques ayant de 8 à 14 atomes de carbone. Jusqu'à 50 % en mole de l'acide aromatique dicarboxylique peut être remplacé par au moins un autre acide aromatique dicarboxylique ayant de 8 à 14 atomes de carbone, et/ou jusqu'à 20% en mole peut être remplacé par un acide aliphatique dicarboxylique ayant de 2 à 14 atomes de carbone.
   A titre d'exemple d'acides aromatiques dicarboxyliques, on peut citer l'acide téréphtalique, isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (p-oxybenzoïque), l'acide 1,3-triméthylène bis (p-oxybenzoique).
   A titre d'exemple de glycols, on peut citer l'éthylène glycol, le 1,3-triméthylène glycol, le 1,4-tétraméthylèneglycol, le 1,6-hexaméthylène glycol, le 1,3 propylène glycol, le 1,8 octaméthylèneglycol, le 1,10-décaméthylène glycol et le 1,4-cyclohexylène diméthanol.
   Les copolymères à blocs polyesters et blocs polyéther sont, par exemple, des copolymères ayant des motifs polyéthers dérivés de polyétherdiols tels que le polyéthylène glycol (PEG), le polypropylène glycol (PPG), le polytriméthylène glycol (PO3G) ou le polytétraméthylène glycol (PTMG), des motifs diacide carboxylique tels que l'acide téréphtalique et des motifs glycol (éthane diol) ou butane diol, 1-4. De tels copolyétheresters sont décrits dans les brevets EP402883 et EP405227. Ces polyétheresters sont des élastomères thermoplastiques. Ils peuvent contenir des plastifiants.
(b) S'agissant des TPU, on peut citer les polyétheruréthanes qui résultent de la condensation de blocs polyéthers souples qui sont des polyétherdiols et de blocs rigides polyuréthanes issus de la réaction d'au moins un diisocyanate pouvant être choisi parmi les diisocyanates aromatiques (ex : MDI, TDI) et les diisocyanates aliphatiques (ex : HDI ou hexaméthylènediisocyanate) avec au moins un diol court. Le diol court allongeur de chaîne peut être choisi parmi les glycols cités plus haut dans la description des copolyétheresters. Les blocs polyuréthanes et les blocs polyéthers sont reliés par des liaisons résultant de la réaction des fonctions isocyanates avec les fonctions OH du polyétherdiol.
   On peut encore citer les polyesteruréthanes qui résultent de la condensation de blocs polyesters souples qui sont des polyesterdiols et de blocs rigides polyuréthanes issus de la réaction d'au moins un diisocyanate avec au moins un diol court. Les polyesterdiols résultent de la condensation de diacides carboxyliques avantageusement choisis parmi les diacides aliphatiques dicarboxyliques ayant de 2 à 14 atomes de carbone et de glycols qui sont des diols courts allongeurs de chaîne choisis parmi les glycols cités plus haut dans la description des copolyétheresters. Ils peuvent contenir des plastifiants.
(c) S'agissant des PEBA, ils résultent de la polycondensation de blocs polyamides à extrémités réactives avec des blocs polyéthers à extrémités réactives, telles que, entre autres :
   1) blocs polyamides à bouts de chaîne diamines avec des blocs polyoxyalkylènes à bouts de chaînes dicarboxyliques.
   2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols
   3) blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.

La masse molaire en nombre Mn des blocs polyamides est comprise entre 400 et 20000 g/mole et de préférence entre 500 et 10000 g/mole.

Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbornane (BAMN) et la pipérazine (Pip).

Avantageusement on a des blocs PA4.12, PA4.14, PA4.18, PA6.10, PA6.12, PA6.14, PA6.18, PA9.12, PA10.10, PA10.12, PA10.14 et PA10.18.

Selon un deuxième type, les blocs polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide alpha oméga amino carboxylique, on peut citer les acides aminocaproïque, amino-7-heptanoïque, amine-11- undécanoïque et amino-12-dodécanoïque.

Avantageusement les blocs polyamides du deuxième type sont en polyamide 11, en polyamide 12 ou en polyamide 6.

Selon un troisième type, les blocs polyamides résultent de la condensation d'au moins un acide alpha oméga aminocarboxylique (ou un lactame), au moins une diamine et au moins un diacide carboxylique.

Dans ce cas, on prépare, les blocs polyamide PA par polycondensation :
- de la ou des diamines aliphatiques linéaires ou aromatiques ayant X atomes de carbone;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),

- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques ;

Avantageusement on utilise comme limiteur de chaîne le diacide carboxylique ayant Y atomes de carbone, que l'on introduit en excès par rapport à la stoechiométrie de la ou des diamines.

Selon une variante de ce troisième type les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemple d'acide alpha omega amino carboxylique aliphatique, on peut citer les acides aminocaproïques, amino-7-heptanoïque, amino-11-undécanoïque et amino-12-dodécanoïque. A titre d'exemple de lactame, on peut citer le caprolactame, l'oenantholactame et le lauryllactame. A titre d'exemple de diamines aliphatiques, on peut citer l'hexaméthylènediamine, la dodécaméthylènediamine et la triméthylhexaméthylène diamine. A titre d'exemple de diacides cycloaliphatiques, on peut citer l'acide 1,4-cyclohexyldicarboxylique. A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque "PRIPOL" par la société "UNICHEMA", ou sous la marque EMPOL par la société HENKEL) et les Polyoxyalkylènes - α,ω diacides. A titre d'exemple de diacides aromatiques, on peut citer les acides téréphtalique (T) et isophtalique (I). A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de blocs polyamides du troisième type, on peut citer les suivantes :
- 6.6/6 dans laquelle 6.6 désigne des motifs hexaméthylènediamine condensée avec l'acide adipique. 6 désigne des motifs résultant de la condensation du caprolactame.
- 6.6/6.10/11/12 dans laquelle 6.6 désigne l'hexaméthylènediamine condensée avec l'acide adipique. 6.10 désigne l'hexaméthylènediamine condensée avec l'acide sébacique. 11 désigne des motifs résultant de la condensation de l'acide aminoundécanoïque. 12 désigne des motifs résultant de la condensation du lauryllactame.

Les blocs polyéthers peuvent représenter 5 à 85 % en poids du copolymère à blocs polyamides et polyéthers. La masse Mn des blocs polyéther est comprise entre 100 et 6 000 g/mole et de préférence entre 200 et 3 000 g/mole.

Les blocs polyéthers sont constitués de motifs oxyde d'alkylène. Ces motifs peuvent être par exemple des motifs oxyde d'éthylène, des motifs oxyde de propylène ou tétrahydrofurane (qui conduit aux enchaînements polytétraméthylène glycol). On utilise ainsi des blocs PEG (polyethylène glycol) c'est à dire ceux constitués de motifs oxyde d'éthylène, des blocs PPG (propylène glycol) c'est à dire ceux constitués de motifs oxyde de propylène, des blocs PO3G (polytriméthylène glycol) c'est-à-dire ceux constitués de motifs polytriméthylène ether de glycol (de tels copolymères avec des blocs polytriméthylene ether sont décrits dans le document US6590065), et des blocs PTMG c'est à dire ceux constitués de motifs tetraméthylène glycols appelés aussi polytétrahydrofurane. Les copolymères PEBA peuvent comprendre dans leur chaîne plusieurs types de polyéthers, les copolyéthers pouvant être à blocs ou statistiques.

On peut également utiliser des blocs obtenus par oxyéthylation de bisphenols, tels que par exemple le bisphenol A. Ces derniers produits sont décrits dans le brevet EP613919.

Les blocs polyéthers peuvent aussi être constitués d'amines primaires éthoxylées. A titre d'exemple d'amines primaires éthoxylées on peut citer les produits de formule : 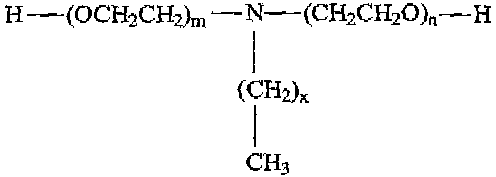 dans laquelle m et n sont compris entre 1 et 20 et x entre 8 et 18. Ces produits sont disponibles dans le commerce sous la marque NORAMOX® de la société CECA et sous la marque GENAMIN® de la société CLARIANT.

Les blocs souples polyéthers peuvent comprendre des blocs polyoxyalkylène à bouts de chaînes NH₂, de telles blocs pouvant être obtenues par cyanoacétylation de blocs polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman, également décrites dans les documents de brevets JP2004346274, JP2004352794 et EP1482011).

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. La méthode générale de préparation en deux étapes des copolymères PEBA ayant des liaisons ester entre les blocs PA et les blocs PE est connue et est décrite, par exemple, dans le brevet français FR2846332. La méthode générale de préparation des copolymères PEBA de l'invention ayant des liaisons amide entre les blocs PA et les blocs PE est connue et décrite, par exemple dans le brevet européen EP1482011. Les blocs polyéther peuvent être aussi mélangés avec des précurseurs de polyamide et un limiteur de chaîne diacide pour faire les polymères à blocs polyamides et blocs polyéthers ayant des motifs répartis de façon statistique (procédé en une étape).

Avantageusement, les copolymères PEBA ont des blocs PA en PA 6, en PA 11, en PA 12, PA 6.12, en PA 6.6/6, en PA 10.10 et/ou en PA 6.14 et des blocs PE en PTMG, en PPG, en PO3G et/ ou en PEG.

Par composition de TPE ignifugée, on entend une composition à base de TPE tel que défini ci-dessus, et qui comprend en outre au moins un agent ignifugeant dépourvu d'halogène, et choisi parmi les phosphinates.

Par phosphinate, on entend un sel métallique de l'acide phosphinique ou diphosphinique. La composition selon l'invention comprend de 25 à 40 % (en poids par rapport au poids total de la composition) d'au moins un phosphinate, éventuellement contenu dans un polymère, choisi parmi un sel métallique de l'acide phosphinique, un sel métallique de l'acide diphosphinique et leur mélange.

De préférence, le sel métallique de l'acide phosphinique selon l'invention est de formule (I) suivante et le sel métallique de l'acide diphosphinique est de formule (II) suivante : 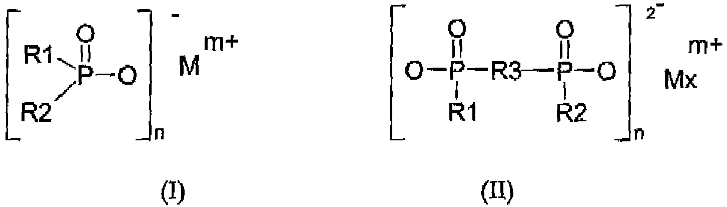 avec
R1 et R2, indépendamment l'un de l'autre, désignent un groupe alkyle en C1-C6 linéaire ou ramifié, ou un groupe aryle;
R3 représente une groupe alkylène en C1-C10 linéaire ou ramifié, arylène en C6-C10, alkylarylène en C6-C10, ou arylalkylène en C6-C10,
M est un ion Mg, Ca, Al, Sb, Sn, Ge, Ti, Zn, Fe, Zr, Ce, Bi, Sr, Mn, Li, Na, K et/ou une base amine protonnée,
m désigne un entier de 1 à 4,
n désigne un entier de 1 à 4,
x désigne un entier de 1 à 4,
n et m étant choisis de manière à ce que le sel soit neutre, c'est-à-dire qu'il ne soit pas porteur d'une charge électrique.

De préférence, M représente un ion calcium, magnésium, aluminium ou zinc.

De préférence, R1 et R2, indépendamment l'un de l'autre, désignent un groupe méthyle, éthyle, n-propyle, iso-propyle, n-butyle, tertio-butyle, n-pentyle et/ou phényle. De préférence, R3 représente un groupe méthylène, éthylène, n-propylène, iso-propylène, n-butylène, tertio-butylène, n-pentylène, n-octylène, n-dodécylène; phénylène, naphthylène; méthylphénylène, éthylphénylène, tertio-butylphénylène, méthylnaphthylène, éthylnaphthylène, tertio-butylnaphthylène; phénylméthylène, phényléthylène, phénylpropylène, or phénylbutylène.

A titre d'exemple de phosphinate convenant pour l'invention, on peut notamment citer l'Exolit® OP 1311, l'Exolit® OP 1314, l'Exolit® OP 1230 et l'Exolit® OP 1312, qui sont des agents ignifugeants à base de sels métalliques d'acides phosphiniques, commercialisés par la société Clariant GmbH.

De préférence, la teneur en phosphinate selon l'invention est comprise dans la gamme allant de 30 à 35% en poids, par rapport au poids total de la composition.

En plus des produits précédents, la composition de l'invention peut comprendre tout agent ignifugeant sans halogène bien connu de l'homme du métier dans le domaine des TPE, autre que celui revendiqué, comme des cyanurates de mélamine, des pyrophosphates de mélamine, des polyphosphates d'ammonium, du borate de zinc, etc. Des combinaisons synergiques des phosphinates métalliques décrits avec d'autres ignifugeants non halogénés peuvent permettre d'augmenter encore l'efficacité ignifugeante sur les TPE.

Des agents anti-goutte de nature siliconée ou fluorée peuvent éventuellement être ajoutés à la composition de l'invention.

Par polyoléfine P1, on entend un copolymère qui comprend au moins deux comonomères différents copolymérisés dans la chaîne polymère. L'un des comonomères est une α-oléfine ; l'autre comonomère est un monomère non fonctionnel insaturé susceptible de polymériser avec l'α-oléfine et choisi parmi les esters vinyliques d'acides carboxyliques.

Préférentiellement, l'α-oléfine comprend de 2 à 30 atomes de carbone. A titre d'exemple, on peut citer l'éthylène, le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. On préfère tout spécialement l'éthylène comme α-oléfine.

A titre d'exemples d'esters vinyliques d'acide carboxylique, on peut citer l'acétate de vinyle, le versatate de vinyle, le propionate de vinyle, le butyrate de vinyle, ou le maléate de vinyle. On préfère l'acétate de vinyle comme ester vinylique d'acide carboxylique.

Un premier exemple de polyoléfine P1 selon l'invention est un copolymère d'éthylène et d'acétate de vinyle, commercialisé sous la marque Evatane®.

De manière optionnelle, la polyoléfine P1 peut comprendre en outre un monomère fonctionnel insaturé portant une fonction choisie parmi les anhydrides d'acide carboxylique.

Les anhydrides d'acide carboxylique peuvent être choisis par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

On préfère tout particulièrement l'anhydride maléique comme monomère fonctionnel.

Un deuxième exemple de polyoléfine P1 selon l'invention est donc un copolymère d'éthylène, d'acétate de vinyle, et d'anhydride maléique, commercialisé sous la marque Orevac® T.
Idéalement, P1 est une polyoléfine de type EVA (Evatane® ou EVA maléisé (Orevac® T).
De préférence, l'EVA comprend de 5 à 40 % en poids d'acétate de vinyle sur le poids d'EVA.
Avantageusement, l'EVA a un MFI à 190°C sous 2,16 kg compris dans la gamme de 0,4 à 400, de préférence de 0,5 à 25.
De préférence, l'EVA comprend de 0,1 à 1% en poids d'anhydride maléique sur le poids d'EVA.
De préférence, la composition selon l'invention comprend de 6 à 20% de polyoléfine P1, sur le poids total de la composition.

Par polyoléfine P2, on entend un copolymère qui comprend au moins deux comonomères différents copolymérisés dans la chaîne polymère. L'un des comonomères est une α-oléfine telle que décrite ci-dessus ; l'autre (ou les autres) comonomère(s) est un monomère fonctionnel capable de polymériser avec l'α-oléfine. On entend par monomère fonctionnel dans P2 un monomère insaturé (comprenant une double liaison C=C) portant une fonction choisie parmi les époxydes et les anhydrides d'acide carboxylique.

Parmi les époxydes insaturés, on peut citer les esters et éthers de glycidyle aliphatiques tels que l'allylglycidyléther, le vinylglycidyléther, le maléate et l'itaconate de glycidyle, l'acrylate et le méthacrylate de glycidyle. Ce sont également par exemple les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.

Les anhydrides d'acide carboxylique peuvent être choisis parmi ceux décrits ci-dessus.

On préfère tout particulièrement le méthacrylate de glycidyle ou/et l'anhydride maléique comme monomère fonctionnel.

Différents monomères fonctionnels peuvent éventuellement être copolymérisés dans la polyoléfine P2.

La polyoléfine P2 peut éventuellement comprendre en outre un monomère non fonctionnel insaturé susceptible de polymériser avec l'α-oléfine et le monomère fonctionnel. Le monomère non fonctionnel insaturé est choisi parmi les esters d'acides carboxyliques insaturés tels que par exemple les acrylates d'alkyle ou les méthacrylates d'alkyle regroupés sous le terme (méth)acrylates d'alkyles. Les chaînes alkyles de ces (méth)acrylates peuvent avoir jusqu'à 30 atomes de carbone. On peut citer comme chaînes alkyles le méthyle, l'éthyle, le propyl, n-butyl, sec-butyl, Isobutyl, tert-butyl, pentyl, hexyl, heptyl, octyl, 2-ethylhexyl, nonyl, decyl, undecyl, dodecyl, tridecyl, tetradecyl, pentadecyl, hexadecyl, heptadecyl, octadecyl, nonadecyl, eicosyl, hencosyl, docosyl, tricosyl, tetracosyl, pentacosyl, hexacosyl, heptacosyl, octacosyl, nonacosyl.

On préfère les (méth)acrylates de méthyle, éthyle et butyle comme esters d'acide carboxylique insaturés.

Différents monomères non fonctionnels peuvent être copolymérisés dans la polyoléfine P2.

Un premier exemple préféré de polyoléfine P2 est un copolymère d'éthylène, d'anhydride maléique et éventuellement de (méth)acrylate d'alkyle. Un deuxième exemple de polyoléfine P2 préféré est un copolymère d'éthylène, de méthacrylate de glycidyle et éventuellement de (méth)acrylate d'alkyle. Ces exemples de polyoléfine P2 sont commercialisés par la demanderesse sous la marque Lotader®.
La polyoléfine P2 sert essentiellement à compatibiliser la polyoléfine P1 avec la matrice TPE, en améliorant la dispersion de P1 dans la matrice TPE. Bien que les performances d'ignifugation soient les mêmes avec ou sans P2, l'absence de polyoléfine P2 dans la composition se manifeste par une altération des performances du TPE en terme d'élasticité, de déformation et de résilience. C'est pourquoi, un minimum de 5% en poids de P2 est présent dans la composition de l'invention. De préférence, la composition selon l'invention comprend de 5 à 7% de polyoléfine P2, sur le poids total de la composition.

Dans la composition selon l'invention, le ratio en poids P1/P2 est supérieur à 1.

La composition selon l'invention peut comprendre en outre au moins un additif. Cet additif peut notamment être choisi parmi les charges organiques ou inorganiques, les renforts, les plastifiants tels que par exemple le BBSA (N-(n-butyl) benzene sulfonamide), les lubrifiants tels que par exemple l'acide stéarique, les stabilisants (par exemple les stabilisants thermiques), les anti-oxydants, anti-UV, le noir de carbone, les nanotubes de carbone ; les colorants et pigments minéraux ou organiques, les pigments, les agents de démoulage, lubrifiants, moussants, les agents anti-choc, agents anti-retrait, les agents nucléants, les agents antistatiques, et leurs mélanges. Les renforts sont notamment choisis parmi des fibres de verre, des fibres de carbone, des fibres naturelles, telle que le lin, le chanvre, le kenaff, le bambou. Parmi les charges, on peut notamment citer la silice, le noir de carbone, les nanotubes de carbone, l'oxyde de titane ou encore les billes de verre. On ne sortirait pas du cadre de l'invention si on ajoutait au matériau des nanocharges minérales comme des argiles modifiées organophiles exfoliables, de type montmorillonite traitée par des cations ammonium quatermaire gras.

De préférence, les additifs sont présents dans la composition généralement en une teneur de 0,1 à 50 % en poids, de préférence 0,1 à 30 %, de préférence de 0,1 à 5% en poids par rapport au poids total de la composition.

La composition peut se présenter sous forme de poudre, de granulés ou de pastilles.

L'invention porte également sur un procédé de préparation de la composition telle que définie ci-dessus. Selon ce procédé, la composition peut être préparée par toute méthode, qui rend possible l'obtention d'un mélange homogène contenant la composition selon l'invention, et éventuellement d'autres additifs, telle que le compoundage à l'état fondu, l'extrusion, le compactage, ou encore le malaxeur à rouleau.

Plus particulièrement, la composition selon l'invention est préparée par mélange à l'état fondu de tous les ingrédients (TPE, P1, P2, ignifugeant) dans un procédé dit « en direct ». On peut aussi préparer la composition selon un procédé en deux étapes, la première consistant en un mélange concentré de l'agent ignifugeant selon l'invention, c'est-à-dire le sel métallique dans la matrice TPE, dans la polyoléfine 1 (P1) ou encore dans la polyoléfine 2 (P2) (mélange maître), puis le diluer par mélange avec soit respectivement, la polyoléfine 1 (P1), la polyoléfine 2 (P2) ou la matrice TPE dans une seconde étape.

On utilise avantageusement les dispositifs habituels de mélange et de malaxage de l'industrie des thermoplastiques tels que les extrudeuses, les extrudeuses de type bi-vis, notamment les extrudeuses bi-vis co-rotatives engrenantes auto-nettoyantes, et les malaxeurs, par exemple les co-malaxeurs de marque BUSS ou les mélangeurs internes. Dans ce procédé, les quatre ingrédients (TPE+P1+P2+ignifugeant) peuvent être soit mélangés à sec et introduits dans la trémie d'alimentation ou alors l'ignifugeant peut être introduit par gavage latéral dans le mélange TPE+P1+P2 préalablement fondu.

Il est recommandé que la préparation des compositions de l'invention (le compoundage) et leur mise en oeuvre soient faites dans les conditions les plus douces possibles en terme de température et de taux de cisaillement. Pour ce faire, on peut se reporter à la référence : O. Schacker, Plastics Additives and Compounding, April 2002, pages 28-33.

La composition selon l'invention résiste au fluage lorsqu'elle est soumise à une flamme telle que celui du test UL94. Elle présente l'avantage de ne pas comprendre d'halogène. De plus, sa dureté Shore mesurée selon la norme ISO 868 est avantageusement comprise dans la gamme de 50 Shore A à 80 Shore D, de préférence de 60 Shore A à 72 Shore D.

La composition selon l'invention possède également une stabilité thermique excellente de manière à être moulée sans rencontrer de problème de dégradation ni de décoloration.

L'invention porte également sur un article obtenu par moulage, injection, extrusion, coextrusion, compression à chaud, multi-injection à partir d'au moins une composition selon l'invention.

La composition selon l'invention est donc avantageusement utilisée pour la fabrication d'objets électriques et/ou électrotechniques, de tubes, de câbles, d'objets moulés et/ou d'objets de sécurité électrique. La composition de l'invention peut notamment servir à fabriquer des boîtiers, des connecteurs, des tubes, des gaines pour des câbles électriques ou des fibres optiques, des coques de téléphone ou d'ordinateur et tout type de pièces utilisées dans les domaines électriques et électroniques.

### Exemples

### Produits utilisés :

Polyamides : PA6 désigne le polyamide 6 (homopolyamide de caprolactame). PA6.6 désigne le polyamide 6.6 (homopolyamide d'hexanediamine et d'acide adipique). PA11 désigne le polyamide 11 (homopolyamide de l'acide 11-aminoundécanoïque). PA12 désigne le polyamide 12 (homopolyamide de lauryllactame).
TPE :
PEBA : Pebax® représente un PEBA commercialisé par Arkema qui désigne le copolymère à blocs PA12 et blocs PTMG (de masses molaires respectives 600 et 2000).
TPU: ELASTOLLAN 1185A (commercialisé par BASF) désigne un polyétheruréthane ingnifugé donné pour être classé V0 selon le test UL94. Polyoléfines :
   P1 : Evatane EVA 2403 (commercialisé par Arkema) désigne un copolymère d'éthylène et d'acétate de vinyle comprenant 24% en poids d'acétate de vinyle et un MFI de 3 (à 190°C sous 2,16 kg).
   P2 : Lotader 3410 (commercialisé par Arkema) désigne un copolymère d'éthylène, d'acrylate de butyle et d'anhydride maléique, comprenant 3% en poids d'anhydride maléique, 17% en poids d'acrylate de butyle et présentant un MFI de 5 (à 190°C sous 2,16 kg).
Agents ignifugeants :
   MC25 (plus précisément Melapur MC25, commercialisé par la société Ciba®) désigne du cyanurate de mélamine.
   Exolit® OP 1311, OP 1314 et OP 1230 désignent chacun un agent ignifugeant à base de sels métalliques d'acides phosphiniques, commercialisés par la société Clariant GmbH.
Additifs éventuels :
   - PER désigne du mono-pentaérythritol.
   - Poudre de PTFE (Zonyl MP1100, commercialisé par la société Dupont).
   - Argile de type montmorillonite échangée par des cations ammonium (Nanofil SE3010, commercialisé par la société Süd Chemie).
   - Talc (Stemic OS, commercialisé par la société Talc de Luzenac).

### Préparation des matériaux ignifugés :

Les formulations des tableaux 2 et 3 sont préparées par mélange (compoundage), grâce à une extrudeuse bi-vis de type Coperion ZSK40 de diamètre 40 mm et de longueur égale à 40 fois son diamètre, fonctionnant à une vitesse de rotation de 300 rpm et à un débit de 70 kg/h selon un profil de température réglé de 220°C (amont) à 240°C (aval), dans laquelle les polymères sont introduits en trémie principale et les agents ignifugeants sont introduits par gavage latéral dans la matière fondue de l'extrudeuse. Les formulations du tableau 3 qui comprennent des polyoléfines sont ainsi préparées par compoundage du Pebax® avec les polyoléfines P1 et P2 dans cette extrudeuse pour former un alliage de polymère ; et par gavage latéral pour charger le phosphinate et le disperser dans la matière fondue de l'extrudeuse.

Test UL94: Ce test normalisé s'effectne sur un jeu de 5 éprouvettes identiques (127 mm x 12,7 mm x 1,6 mm). Les échantillons sont suspendus à un support. L'inflammation s'effectue par le bas avec une flamme bleue de bec Bunsen de 20 mm de haut. La flamme est appliquée pendant 10 secondes puis retirée. On note T1 le temps pendant lequel la combustion (combustion avec flamme puis combustion incandescente) persiste. La flamme est ensuite de nouveau appliquée pendant une durée de 10 secondes puis retirée. On note de la même manière T2 le temps pendant lequel la combustion persiste. Le phénomène de post-incandescence est pris en compte ainsi que l'éventualité de chute de gouttes enflammées susceptibles de propager le feu à un coton placé à l'aplomb du barreau testé.

**Tableau 1**

| **Critères de classification** | **V0** | **V1** | **V2** |
|---|---|---|---|
| **Nombres de spécimens brûlés** | 5 | 5 | 5 |
| **Nombres de combustions** | 2 | 2 | 2 |
| **Durée de combustion après la première flamme** | <10s | <30s | <30s |
| **Durée totale de combustion pour les 5 échantillons et pour les 2 combustions** | <50s | <250s | <250s |
| **Durée de combustion incandescente persistante après la 2^{ème} flamme** | <30s | <60s | <60s |
| **Gouttelettes enflammées enflammant le coton** | Non | Non | Oui |
| **Support brûlé** | Non | Non | Non |

Les résultats de test UL94 réalisé sur des matériaux de différentes compositions sont décrits dans les tableaux 2 et 3 ci-après.

Dans les tableaux 2 et 3 qui suivent, les compositions « Ex » correspondent à des exemples selon l'invention (Ex1 à Ex5), tandis que les compositions « Cp » correspondent à des comparatifs (Cp1 à Cp16).

D'après le tableau 2 ci-dessous, on observe que le cyanurate de mélamine est efficace dans les polyamides mais inefficace dans les TPE qui ne résistent pas à la première inflammation du test UL94. De même, les sels métalliques phosphiniques permettent d'ignifuger efficacement des polyamides classés alors UL94-V0. Lorsque les mêmes sels métalliques phosphiniques sont introduits dans une matrice TPE, on constate que le TPE coule et forme des gouttes dès la première inflammation et il est donc impossible de réaliser la deuxième inflammation du test UL 94.

Ce tableau 2 reflète bien les problèmes rencontrés pour ignifuger les TPE depuis de nombreuses années : les TPE sont difficiles à ignifuger car, dès l'application de la flamme, ils coulent (fluent) rapidement et forment des gouttes enflammées.

On tente l'ajout de 0,5% de PTFE ou de 5% de talc ou de 2% de nanocharge de type argile exfoliable organophile dans la composition du comparatif Cp8, mais le test UL94 donne toujours un classement V2. Les additifs anti-goutte traditionnellement utilisés pour résoudre ce problème de fluage ne sont pas efficaces dans le cas des TPE ignifugés selon l'invention, comme le montrent les compositions des comparatifs Cp8.1, Cp8.2, Cp8.3 du tableau 2.1.

**Tableau 2**

| | **Cp1** | **Cp2** | **Cp3** | **Cp4** | **Cp5** | **Cp6** | **Cp7** | **Cp8** | **Cp9** | **Cp10** |
|---|---|---|---|---|---|---|---|---|---|---|
| **Matrice PA ou TPE (PEBA)** | **PA6** | **PA6.6** | **PA12** | **PA11** | **Pebax®** | **Pebax®** | **Pebax®** | **Pebax®** | **Pebax®** | **Pebax®** |
| **MC25** | 8 | 10 | 15 | 12 | **20** | | | | **17.5** | **17.5** |
| **PER** | | | | 2 | **2** | | | | | |
| **Phosphinate op1311** | | | | | | | | **35** | | |
| **Phosphinate op1314** | | | | | | **25** | **35** | | | **17.5** |
| **Phosphinate op1230** | | | | | | | | | **17.5** | |
| **Test UL94** | V0 | V0 | V0 | V0 | **V2** | **V2** | **V2** | **V0-V2** | **V0-V2** | **V2** |
| **1.6 mm** | | | | | | | | | | |
| **Temps 1^{ère} Inflammation** | | | | | | **4 à 8 sec** | **4 à 8 sec** | **3 à 6 sec** | **4 à 8 sec** | **3 à 6 sec** |
| **Goutte** | non | non | non | non | **oui** | **oui** | **oui** | **oui** | **oui** | **oui** |
| **Goutte enflammée** | non | non | non | non | **oui** | **oui** | **oui** | **parfois** | **parfois** | **oui** |
| **Possibilité d'appliquer une deuxième fois la flamme** | oui | oui | oui | oui | non | non | non | non | non | non |
| | | | | | Fluage après 1^{ère} inflamm ation | Fluage après 1^{ère} inflamm ation | Fluage après 1^{ère} inflamm ation | Fluage après 1^{ère} inflamm ation | Fluage après 1^{ère} inflamm ation | Fluage après 1^{ère} inflamm ation |

**Tableau 2.1**

| | **Cp8.1** | **Cp8.2** | **Cp8.3** |
|---|---|---|---|
| Pebax(R) | 64,5 | 62 | 64 |
| Exolit OP1311 | 35 | 33 | 34 |
| Zonyl MP1100 | 0,5 | | |
| Nanofil SE3010 | | | 2 |
| Steamic OS | | 5 | |
| Test UL94 | V2 | V2 | V2 |

### Figure 1

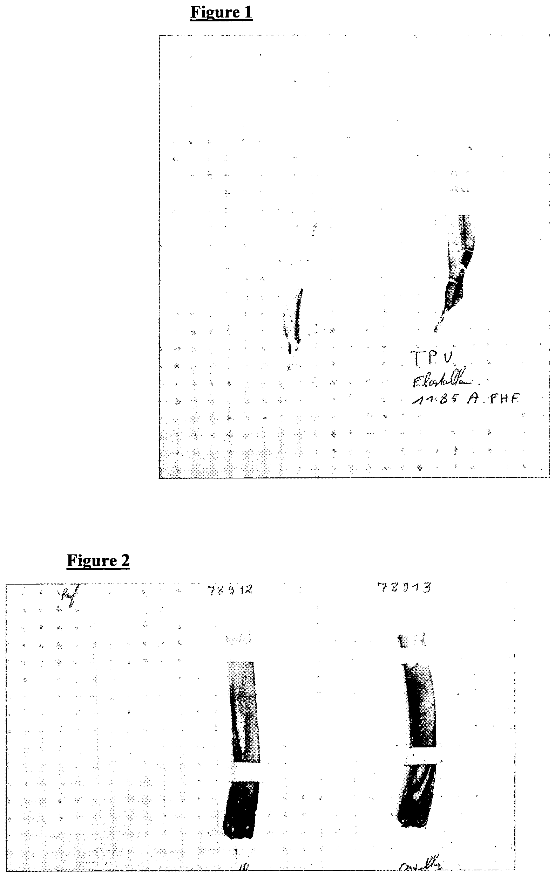

La figure 1 est une photographie montrant l'état d'un barreau (éprouvette UL94 : 127 mm x 12,7 mm x 1,6 mm) après une seule inflammation au test UL94, pour :
- un Pebax 2533 + 35% de phosphinate OP 1311 (barreau de gauche de la figure 1 correspondant au comparatif Cp8 du tableau 2), et pour
- un TPU ignifugé, donné pour être classé V0 (barreau de droite correspondant au produit ELASTOLLAN 1185A commercialisé par la société BASF).

Ces deux matériaux (barreaux) fluent et forment des gouttes. Il suffit que ces gouttes n'enflamment pas le coton pour que leur classement soit V0. Dans les deux cas de la figure 1 (PEBA et TPU), il est impossible de faire une deuxième inflammation (application de la flamme pendant 10 secondes), car le matériau (PEBA comme TPU) continue à fluer et des gouttes tombent sur le bec bunsen. Un matériau présentant un tel comportement ne satisfait pas aux exigences requises pour les applications dans les domaines électriques ou électrotechniques.

**Tableau 3**

| **Essais:** | **Cp11** | **Cp12** | **Cp13** | **Cp14** | **Ex1** | **Cp15** | **Ex2** | **Ex3** | **Cp16** | **Ex4** | **Ex5** |
|---|---|---|---|---|---|---|---|---|---|---|---|
| **Pebax®** | 65 | 65 | 61,5 | 57,4 | 53,3 | 55 | 51,4 | 47,7 | 49 | 45,5 | 42,3 |
| **Phosphinate Exolit® OP 1311** | 35 | 35 | 25 | 30 | 35 | 25 | 30 | 35 | 25 | 30 | 35 |
| **P1** : **Évatane® EVA 2403** | | | 7,5 | 7 | 6,5 | 14 | 13 | 12,1 | 20 | 18,9 | 17,5 |
| **P2: Lotader® 3410** | | | 6 | 5,6 | 5,2 | 6 | 5,6 | 5,2 | 6 | 5,6 | 5,2 |
| **UL94 (1,6 mm)** | V0 | V2 | V2 | V2 | V1 | V2 | V1 | V1 | V2 | V1 | V0 |
| **Goutte enflammée GE ou goutte non enflammée GNE** | GNE | GE | GE | GE | non | GE | non | non | GE | non | non |
| **produit coule => pas de T2** | oui | oui | oui | oui | T2 | oui | T2 | T2 | T2 | T2 | T2 |
| **somme T1** | 28 | 34,2 | 90 | 145 | | 80 | | | | | |
| **Somme des temps T1+T2** | impossible | | | | 116 | | 129,3 | 63,6 | 168 | 101 | 35,7 |

Le tableau 3 ci-dessus montre la résolution de ce problème de fluage et de gouttage des TPE grâce à l'incorporation de deux types différents de polyoléfine(s) (P1 : Evatane® EVA 2403 et P2 : Lotader® 3410) dans le TPE. Le tableau 3 montre que les comparatifs Cp11 et Cp12 (bien que CP11 soit classé V0), ne sont pas robustes au test UL94, ceci à cause de la présence d'une goutte, qu'elle soit enflammée ou pas. Dans tous les cas, il est impossible de réaliser une deuxième inflammation car les éprouvettes coulent et forment des gouttes.

Les comparatifs Cp13, Cp14 et l'exemple Ex1 sont réalisés avec respectivement 25, 30 et 35% d'Exolit® OP 1311. Leur teneur en P1 (EVA 2403) est faible 6,5 à 7,5%. Par rapport aux comparatifs sans EVA, l'éprouvette de l'exemple 1 ne forme plus de gouttes ni de fluage avec 35% d'Exolit® OP 1311. L'exemple 1 est classé V1 car la somme des temps (T1 + T2) est supérieure à 50 secondes.

Le comparatifs Cp15 et les exemples Ex2 et Ex3 sont réalisés avec respectivement 25,30 et 35% d'Exolit® OP 1311. La teneur en P1 (EVA 2403) est comprise dans la gamme de 12 à 14%. Les exemples Ex2 et Ex3 avec au moins 30% de phosphinate (Exolit® OP 1311) sont classés V1 (sans fluage ni goutte).

Les comparatifs Cp16 et les exemples Ex4 et Ex5 sont réalisés avec 25, 30 et 35% d'Exolit® OP 1311. Leur teneur en P1 (EVA 2403) est comprise dans la gamme de 18 à 20%. L'exemple Ex4 est classé V1 (sans fluage ni goutte avec 30% de phosphinate OP 1311) et l'exemple 5 est classé V0 (avec 35% d'Exolit® OP 1311).

Les exemples Ex1 à Ex5 montrent bien l'impact de l'ajout de polyoléfine P1 (EVA) à la matrice TPE sur la suppression des problèmes de fluage et/ou de gouttage. Dans tous ces exemples, une teneur minimale de 5% en poids de polyoléfine P2 dans la composition est nécessaire pour rendre compatibles la polyoléfine P1 et la matrice TPE.

La dureté Shore D mesurée selon la norme ISO 868, à 20°C après 15 secondes, sur les barreaux fabriqués à partir des compositions des exemples Ex1 à Ex5 selon l'invention est comprise dans tous les cas dans la gamme de 25 Shore D à 29 Shore D.

La figure 2 est une photographie représentant de gauche à droite : la forme d'un barreau initial (de dimension : 127 mm x 12.7 mm x 1,6 mm), et deux barreaux ayant subi les deux inflammations du test UL94 correspondant respectivement aux compositions des exemples selon l'invention Ex4 et Ex5, et pour lesquelles on n'observe pas de gouttage ni de fluage.

## Revendications

1. Utilisation d'au moins deux polyoléfines P1 et P2 comme agent anti-fluage et/ou agent anti-gouttage dans une composition d'élastomère thermoplastique (TPE) ignifugée, **caractérisée en ce que** :
- P1 comprend au moins un monomère choisi parmi les α-oléfines et au moins un monomère choisi parmi les esters vinyliques d'acides carboxyliques ;
- P2 comprend au moins un monomère choisi parmi les α-oléfines et au moins un monomère insaturé portant une fonction époxyde ou anhydride d'acide carboxylique ;
- la somme des polyoléfines représente plus de 10% en poids, P2 représente au moins 5% en poids et le ratio en poids P1/P2 est supérieur à 1 ;
- ledit TPE représente moins de 55% en poids,
sur le poids total de la composition ;
- le TPE est choisi parmi les COPE et/ ou les TPU et/ ou les PEBA et/ ou leurs mélanges ; et
- la composition ignifugée comprend au moins un phosphinate choisi parmi les sels métalliques de l'acide phosphinique, les sels métalliques de l'acide diphosphinique, et leurs mélanges.

2. Utilisation selon la revendication 1, dans laquelle le TPE est un PEBA.

3. Utilisation selon l'une quelconque des revendications 1 ou 2, dans laquelle P1 comprend en outre un monomère fonctionnel insaturé portant une fonction choisie parmi les anhydrides d'acide carboxylique.

4. Utilisation selon l'une quelconque des revendications 1 à 3, dans laquelle P2 comprend en outre un monomère choisi parmi les esters d'acides carboxyliques insaturés.

5. Utilisation selon l'une quelconque des revendications 1 à 4, dans laquelle la composition ignifugée comprend au moins un phosphinate choisi parmi les sels métalliques de l'acide phosphinique, les sels métalliques de l'acide diphosphinique, et leurs mélanges.

6. Composition comprenant :
- entre 40 et 55 % d'au moins un élastomère thermoplastique (TPE),
- entre 25 et 40 % d'au moins un phosphinate, et
- entre 10 et 35 % d'au moins deux polyoléfines P1 et P2, le ratio en poids P1/P2 étant supérieur à 1, et P2 représentant au moins 5% en poids, sur le poids total de la composition, et dans laquelle :
- P1 comprend au moins un monomère choisi parmi les α-oléfines et au moins un monomère choisi parmi les esters vinyliques d'acides carboxyliques ;
- P2 comprend au moins un monomère choisi parmi les α-oléfines et au moins un monomère insaturé portant une fonction époxyde ou anhydride d'acide carboxylique ;
- ledit au moins un TPE est choisi parmi les COPE et/ ou les TPU et/ ou les PEBA et/ ou leurs mélanges.

7. Composition selon la revendication 6, **caractérisée en ce que** ledit au moins un phosphinate est choisi parmi les sels métalliques de l'acide phosphinique, les sels métalliques de l'acide diphosphinique, et leurs mélanges.

8. Composition selon l'une quelconque des revendications 6 ou 7, dans laquelle P1 comprend en outre un monomère fonctionnel insaturé portant une fonction choisie parmi les anhydrides d'acide carboxylique.

9. Composition selon l'une quelconque des revendications 6 à 8, dans laquelle P2 comprend en outre un monomère choisi parmi les esters d'acides carboxyliques insaturés.

10. Composition selon l'une quelconque des revendications 6 à 9, **caractérisée en ce que** P1 comprend un copolymère d'éthylène et d'acétate de vinyle (EVA).

11. Composition selon l'une quelconque des revendications 6 à 12, **caractérisée en ce que** P1 est un copolymère d'éthylène, d'acétate de vinyle et d'anhydride maléique (EVA maléisé).

12. Composition selon l'une quelconque des revendications 10 ou 11, **caractérisée en ce que** l'EVA comprend de 5 à 40 % en poids d'acétate de vinyle sur le poids d'EVA.

13. Composition selon l'une quelconque des revendications 10 à 12, **caractérisée en ce que** l'EVA a un MFI à 190°C sous 2,16 kg compris dans la gamme de 0,4 à 400, de préférence de 0,5 à 25.

14. Composition selon l'une quelconque des revendications 11 à 13, **caractérisée en ce que** l'EVA comprend de 0,1 à 1% en poids d'anhydride maléique sur le poids d'EVA.

15. Composition selon l'une quelconque des revendications 7 à 14, **caractérisée en ce que** P2 comprend un copolymère choisi parmi un copolymère d'éthylène, d'anhydride maléique et éventuellement de (méth)acrylate d'alkyle et/ou un copolymère d'éthylène, de méthacrylate de glycidyle et éventuellement de (méth)acrylate d'alkyle.

16. Composition selon l'une quelconque des revendications 7 à 15, **caractérisée en ce qu'**elle ne comprend pas d'halogène.

17. Composition selon l'une quelconque des revendications 7 à 16, **caractérisée en ce que** sa dureté Shore mesurée selon la norme ISO 868 est comprise dans la gamme de 50 Shore A à 80 Shore D, de préférence de 60 Shore A à 72 Shore D.

18. Utilisation d'une composition selon l'une quelconque des revendications 6 à 17, pour la fabrication d'objets électriques et/ou électrotechniques, de tube, de câbles, d'objets moulés et/ou d'objets de sécurité électrique.

19. Article obtenu par injection, extrusion, coextrusion, compression à chaud, multi-injection à partir d'au moins une composition selon l'une quelconque des revendications 6 à 17.

## Patentansprüche

1. Verwendung von mindestens zwei Polyolefinen P1 und P2 als Fließverhinderungsmittel und/oder Anti-Tropfmittel in einer flammhemmenden Zusammensetzung aus thermoplastischen Elastomeren (TPE), **dadurch gekennzeichnet, dass**:
- P1 mindestens ein Monomer umfasst, das aus α-Olefinen ausgewählt ist, und mindestens ein Monomer, das aus Carbonsäurevinylestern ausgewählt ist;
- P2 mindestens ein Monomer umfasst, das aus α-Olefinen ausgewählt ist, und mindestens ein ungesättigtes Monomer, das eine funktionelle Epoxid- oder Carbonsäureanhydridgruppe trägt;
- die Summe der Polyolefine mehr als 10 Gewichts-% beträgt, P2 mindestens 5 Gewichts-% ausmacht und das Gewichtsverhältnis P1/P2 größer als 1 ist;
- das TPE weniger als 55 Gewichts-% ausmacht,
bezogen auf das Gesamtgewicht der Zusammensetzung;
- das TPE ausgewählt ist aus den COPE und/oder den TPU und/oder den PEBA und/oder ihren Mischungen; und
- die flammhemmende Zusammensetzung mindestens ein Phosphinat umfasst, das aus Metallsalzen der Phosphinsäure, Metallsalzen der Diphosphinsäure und ihren Mischungen ausgewählt ist.

2. Verwendung nach Anspruch 1, bei der das TPE ein PEBA ist.

3. Verwendung nach Anspruch 1 oder 2, bei der P1 ferner ein ungesättigtes funktionelles Monomer umfasst, das eine funktionelle Gruppe trägt, die aus Carbonsäureanhydriden ausgewählt ist.

4. Verwendung nach einem der Ansprüche 1 bis 3, bei der P2 ferner ein Monomer umfasst, das aus ungesättigten Carbonsäureestern ausgewählt ist.

5. Verwendung nach einem der Ansprüche 1 bis 4, bei der die flammhemmende Zusammensetzung mindestens ein Phosphinat umfasst, das aus Metallsalzen der Phosphinsäure, Metallsalzen der Diphosphinsäure und ihren Mischungen ausgewählt ist.

6. Zusammensetzung, umfassend:
- zwischen 40 und 55 % von mindestens einem thermoplastischen Elastomer (TPE),
- zwischen 25 und 40 % von mindestens einem Phosphinat, und
- zwischen 10 und 35 % von mindestens zwei Polyolefinen P1 und P2, wobei das Gewichtsverhältnis P1/P2 größer als 1 ist und P2 mindestens 5 Gewichts-% bezogen auf das Gesamtgewicht der Zusammensetzung ausmacht, und bei der:
- P1 mindestens ein Monomer umfasst, das aus α-Olefinen ausgewählt ist, und mindestens ein Monomer, das aus Carbonsäurevinylestern ausgewählt ist;
- P2 mindestens ein Monomer umfasst, das aus α-Olefinen ausgewählt ist, und mindestens ein ungesättigtes Monomer, das eine funktionelle Epoxid- oder Carbonsäureanhydridgruppe trägt;
- das mindestens eine TPE aus den COPE und/oder den TPU und/oder den PEBA und/oder ihren Mischungen ausgewählt ist.

7. Zusammensetzung nach Anspruch 6, **dadurch gekennzeichnet, dass** das mindestens eine Phosphinat aus Metallsalzen der Phosphinsäure, Metallsalzen der Diphosphinsäure und ihren Mischungen ausgewählt ist.

8. Zusammensetzung nach Anspruch 6 oder 7, bei der P1 ferner ein ungesättigtes funktionelles Monomer umfasst, das eine funktionelle Gruppe trägt, die aus Carbonsäureanhydriden ausgewählt ist.

9. Zusammensetzung nach einem der Ansprüche 6 bis 8, bei der P2 ferner ein Monomer umfasst, das aus ungesättigten Carbonsäureestern ausgewählt ist.

10. Zusammensetzung nach einem der Ansprüche 6 bis 9, **dadurch gekennzeichnet, dass** P1 ein Copolymer aus Ethylen und Vinylacetat (EVA) umfasst.

11. Zusammensetzung nach einem der Ansprüche 6 bis 12, **dadurch gekennzeichnet, dass** P1 ein Copolymer aus Ethylen, Vinylacetat und Maleinsäureanhydrid (mit Maleinsäureanhydrid gepfropftes EVA) ist.

12. Zusammensetzung nach Anspruch 10 oder 11, **dadurch gekennzeichnet, dass** EVA 5 bis 40 Gewichts-% Vinylacetat bezogen auf das EVA-Gewicht umfasst.

13. Zusammensetzung nach einem der Ansprüche 10 bis 12, **dadurch gekennzeichnet, dass** EVA einen MFI bei 190°C mit unter 2,16 kg im Bereich von 0,4 bis 400, vorzugsweise von 0,5 bis 25 aufweist.

14. Zusammensetzung nach einem der Ansprüche 11 bis 13, **dadurch gekennzeichnet, dass** EVA 0,1 bis 1 Gewichts-% Maleinsäureanhydrid bezogen auf das EVA-Gewicht umfasst.

15. Zusammensetzung nach einem der Ansprüche 7 bis 14, **dadurch gekennzeichnet, dass** P2 ein Copolymer umfasst, das aus einem Copolymer aus Ethylen, Maleinsäureanhydrid und gegebenenfalls Alkyl(meth)acrylat und/oder einem Copolymer aus Ethylen, Glycidylmethacrylat und gegebenenfalls Alkyl(meth)acrylat ausgewählt ist.

16. Zusammensetzung nach einem der Ansprüche 7 bis 15, **dadurch gekennzeichnet, dass** sie kein Halogen umfasst.

17. Zusammensetzung nach einem der Ansprüche 7 bis 16, **dadurch gekennzeichnet, dass** ihre nach der Norm ISO 868 gemessene Shore-Härte im Bereich von 50 Shore A bis 80 Shore D, vorzugsweise von 60 Shore A bis 72 Shore D liegt.

18. Verwendung einer Zusammensetzung nach einem der Ansprüche 6 bis 17 zur Herstellung von elektrischen und/oder elektrotechnischen Gegenständen, von Rohren, Kabeln, Formteilen und/oder Gegenständen für die elektrische Sicherheit.

19. Artikel, der durch Spritzgießen, Extrusion, Coextrusion, Warmpressen, Mehrkomponenten-Spritzgießen von mindestens einer Zusammensetzung nach einem der Ansprüche 6 bis 17 erhalten wird.

## Claims

1. Use of at least two polyolefins P1 and P2 as flow-preventing agent and/or anti-dripping agent in a flame-retarded thermoplastic elastomer (TPE) composition, **characterized in that**:
- P1 comprises at least one monomer chosen from α-olefins and at least one other monomer chosen from vinyl esters of carboxylic acids;
- P2 comprises at least one monomer chosen from α-olefins and at least one unsaturated monomer carrying an epoxide or carboxylic acid anhydride functional group;
- the sum of the polyolefins represents more than 10% by weight, P2 represents at least 5% by weight and the P1/P2 ratio by weight is greater than 1;
- the said TPE represents less than 55% by weight,
with respect to the total weight of the composition;
- the TPE is chosen from COPEs and/or TPUs and/or PEBAs and/or their blends; and
- the flame-retarded composition comprises at least one phosphinate chosen from metal salts of phosphinic acid, metal salts of diphosphinic acid and their mixtures.

2. Use according to Claim 1, in which the TPE is a PEBA.

3. Use according to either one of Claims 1 and 2, in which P1 additionally comprises an unsaturated functional monomer carrying a functional group chosen from carboxylic acid anhydrides.

4. Use according to any one of Claims 1 to 3, in which P2 additionally comprises a monomer chosen from esters of unsaturated carboxylic acids.

5. Use according to any one of Claims 1 to 4, in which the flame-retarded composition comprises at least one phosphinate chosen from metal salts of phosphinic acid, metal salts of diphosphinic acid and their mixtures.

6. Composition comprising:
- between 40 and 55% of at least one thermoplastic elastomer (TPE),
- between 25 and 40% of at least one phosphinate, and
- between 10 and 35% of at least two polyolefins P1 and P2, the P1/P2 ratio by weight being greater than 1 and P2 representing at least 5% by weight, with respect to the total weight of the composition, and in which:
- P1 comprises at least one monomer chosen from α-olefins and at least one monomer chosen from vinyl esters of carboxylic acids;
- P2 comprises at least one monomer chosen from α-olefins and at least one unsaturated monomer carrying an epoxide or carboxylic acid anhydride functional group;
- the said at least one TPE is chosen from COPEs and/or TPUs and/or PEBAs and/or their blends.

7. Composition according to Claim 6, **characterized in that** the said at least one phosphinate is chosen from metal salts of phosphinic acid, metal salts of diphosphinic acid and their mixtures.

8. Composition according to either one of Claims 6 and 7, in which P1 additionally comprises an unsaturated functional monomer carrying a functional group chosen from carboxylic acid anhydrides.

9. Composition according to any one of Claims 6 to 8, in which P2 additionally comprises a monomer chosen from esters of unsaturated carboxylic acids.

10. Composition according to any one of Claims 6 to 9, **characterized in that** P1 comprises a copolymer of ethylene and vinyl acetate (EVA).

11. Composition according to any one of Claims 6 to 12, **characterized in that** P1 is a copolymer of ethylene, vinyl acetate and maleic anhydride (maleicized EVA).

12. Composition according to either one of Claims 10 and 11, **characterized in that** the EVA comprises from 5 to 40% by weight of vinyl acetate, with respect to the weight of EVA.

13. Composition according to any one of Claims 10 to 12, **characterized in that** the EVA has an MFI, at 190°C under 2.16 kg, comprised within the range from 0.4 to 400, preferably from 0.5 to 25.

14. Composition according to any one of Claims 11 to 13, **characterized in that** the EVA comprises from 0.1 to 1% by weight of maleic anhydride, with respect to the weight of EVA.

15. Composition according to any one of Claims 7 to 14, **characterized in that** P2 comprises a copolymer chosen from a copolymer of ethylene, maleic anhydride and optionally alkyl (meth)acrylate and/or a copolymer of ethylene, glycidyl methacrylate and optionally alkyl (meth)acrylate.

16. Composition according to any one of Claims 7 to 15, **characterized in that** it does not comprise halogen.

17. Composition according to any one of Claims 7 to 16, **characterized in that** its Shore hardness, measured according to Standard ISO 868, is comprised within the range from 50 Shore A to 80 Shore D, preferably from 60 Shore A to 72 Shore D.

18. Use of a composition according to any one of Claims 6 to 17 in the manufacture of electrical and/or electrical engineering items, pipes, cables, moulded items and/or electrical safety items.

19. Article obtained by injection moulding, extrusion, coextrusion, hot pressing, or multi-injection starting from at least one composition according to any one of Claims 6 to 17.
